Europäisches Patentamt

(19) **European Patent Office**

Office européen des brevets

(11) Numéro de publication: **0 101 377**
**B1**

(12) **FASCICULE DE BREVET EUROPEEN**

(45) Date de publication du fascicule du brevet:
**07.01.87**

(51) Int. Cl.⁴: **H 04 L 11/20,** G 06 F 15/16

(21) Numéro de dépôt: **83401634.7**

(22) Date de dépôt: **09.08.83**

(54) **Dispositif pour commander des transferts de fichiers entre des ordinateurs.**

(30) Priorité: **13.08.82 FR 8214083**

(43) Date de publication de la demande:
**22.02.84 Bulletin 84/8**

(45) Mention de la délivrance du brevet:
**07.01.87 Bulletin 87/2**

(84) Etats contractants désignés:
**CH DE GB IT LI NL**

(56) Documents cités:
**AFIPS CONFERENCE PROCEEDINGS NATIONAL
COMPUTER CONFERENCE, 4-7 mai 1981, pages
191-201, Chicago, Arlington, USA K. HWANG et al.:
"Engineering computer network (ECN): A hardwired
network of UNIX computer systems"
IEEE TRANSACTIONS ON COMMUNICATIONS, vol.
COM-29, no. 4, avril 1981, pages 392-398, IEEE, New
York, USA LA ROY W. TYMES: "Routing and flow
control in TYMNET"
PATENTS ABSTRACTS OF JAPAN, vol. 5, no. 175
(P-88)[847], 11 novembre 1981
IEEE INTERNATIONAL CONFERENCE ON
COMMUNICATIONS. CONFERENCE RECORD, vol. 1 of
3, Philadelphia, 13-17 juin 1982, pages 2.F.1.1-2.F.1.5,
IEEE, New York, USA A. LAVIA et al.: "Terminal
interfaces for a packet-switched network"**

(73) Titulaire: **Irlande, Jean-Paul, 4 Allée Bourvil,
F-94000 Creteil (FR)**

(72) Inventeur: **Irlande, Jean-Paul, 4 Allée Bourvil,
F-94000 Creteil (FR)**

(74) Mandataire: **Mongrédien, André et al, c/o
BREVATOME 25, rue de Ponthieu, F-75008 Paris (FR)**

(56) Documents cités: (suite)
**NACHRICHTENTECHNISCHE ZEITSCHRIFT, vol. 32, no.
3, mars 1979, pages 177-182, Berlin, DE. H.
SARBINOWSKI: "Die Nutzung öffentlicher
Datenpaketvermittlungs-Dienste"**

**Description**

La présente invention concerne un dispositif pour commander des transferts de fichiers entre des ordinateurs et, plus précisément, pour commander des transferts de fichiers entre deux ordinateurs reliés à un réseau de communication accessible à au moins un terminal, par l'intermédiaire d'un concentrateur asynchrone; ce concentrateur est connecté entre le réseau et une jonction d'entrée-sortie du terminal.

L'invention s'applique aux transferts de fichiers et, plus généralement aux transferts de données entre des ordinateurs reliés à une même réseau, sous la commande d'un terminal ayant accès au réseau. Elle peut être utilisée dans des réseaux de transmission de données par «paquets», par modulation d'impulsion codées... etc.

On sait que l'accès à un ordinateur, en temps partagé, est actuellement une opération courante. Il est possible en effet, de lire ou d'écrire des données constituant des fichiers contenus dans des mémoires d'ordinateurs, à partir d'un terminal. Un autre besoin qui est apparu plus récemment, est de faire communiquer plusieurs ordinateurs connectés à un même réseau de communications, notamment pour pouvoir faire transiter le contenu de fichiers d'un ordinateur à un autre. Ces réseaux sont soit des réseaux spécialisés, soit des réseaux de transmission de données.

Le problème du transfert de fichiers entre ordinateurs d'un même constructeur est aujourd'hui pratiquement résolu de façon spécifique; il n'en est pas de même lorsqu'il est nécessaire de faire communiquer des ordinateurs conçus par des constructeurs différents et présentant donc, le plus souvent, des spécifications fonctionnelles différentes. De nombreux utilisateurs souhaitant faire communiquer des ordinateurs conçus par des constructeurs différents, réalisent généralement un dispositif spécifique de transfert de données entre ces ordinateurs; ce dispositif nécessite des investissements très importants en matériel et en logiciel; il n'est pas du tout utilisable pour transférer des données entre des ordinateurs présentant des spécifications fonctionnelles qui ne correspondent pas à celles des ordinateurs pour lesquels ce dispositif a été réalisé. D'autres constructeurs proposent des architectures de réseaux permettant d'interconnecteur leurs propres ordinateurs; ces architectures sont élaborées selon les normes de chaque constructeur, en raison de l'absence d'une norme internationale complète et efficace.

Une norme internationale (ISO: Organisation Internationale de Normalisation), est en cours d'élaboration; cette norme internationale permettra de définir la constitution des réseaux d'ordinateurs. Ce n'est que lorsqu'elle sera achevée qu'il sera permis d'envisager des échanges de données et des partages de ressources, entre plusieurs ordinateurs connectés à un même réseau.

Les dispositifs existants voir par exemple AFIPS CONFÉRENCE PROCEEDINGS NATIONAL COMPUTER CONFÉRENCE, 4–7 mai 1981, pages 191–201, K. HWANG et al.: « Engineering computer network (ECN): A hardwired network of UNIX Computer system» qui permettent de faire des transferts de fichiers entre ordinateurs connectés à un même réseau présentent donc de nombreux inconvénients puisqu'ils sont spécifiques de certains types d'ordinateurs, et par conséquent coûteux: en effet, il faut généralement insérer entre les ordinateurs qui doivent communiquer à travers un réseau, des ensembles de conversion de protocoles, ou des supports d'informations intermédiaires de gestion, tels que des micro-ordinateurs par exemple. Ces investissements coûteux ne permettent pas malgré tout, de réaliser des dispositifs de commande de transferts de fichiers entre des ordinateurs de types différents de ceux des ordinateurs prévus initialement.

La présente invention a pour but de remédier à ces inconvénients et notamment de réaliser un dispositif pour commander des transferts de fichiers entre des ordinateurs reliés à un réseau de communication accessible par au moins un terminal, par l'intermédiaire d'un concentrateur asynchrone, connecté entre le réseau et une jonction d'entrée-sortie du terminal. Ce dispositif permet de mettre en communication, par l'intermédiaire du réseau, des ordinateurs de types différents. Il permet notamment, sans aménagement particulier, de remplacer un ordinateur relié en réseau et qui présente un type déterminé, par un ordinateur d'un type différent.

L'invention a pour objet un dispositif pour commander les transferts de fichiers entre des ordinateurs reliés à un réseau de communications accessible à au moins un terminal par l'intermédiaire d'un concentrateur asynchrone, ce concentrateur étant connecté entre le réseau et une jonction d'entrée-sortie du terminal, comprenant des moyens connectés entre la jonction d'entrée-sortie du terminal et le concentrateur pour établir de manière asynchrone, par l'intermédiaire du concentrateur, un premier circuit virtuel entre le terminal et un premier ordinateur du réseau, puis un second circuit virtuel entre le terminal et un second ordinateur du réseau, et des moyens de liaison pour relier ensuite les circuits virtuels ainsi établis, les transferts de fichiers entre le premier et le second ordinateurs étant alors effectués à travers ces moyens de liaison caractérisé en ce que les moyens pour établir les premier et second circuits virtuels, comprennent au moins un commutateur à deux positions comportant une borne commune reliée à la jonction d'entrée-sortie du terminal et deux bornes de commutation reliées au concentrateur et correspondant aux deux positions du commutateur, ce commutateur permettant d'établir les premier et second circuits virtuels.

Selon une autre caractéristique, les moyens de liaison comprennent au moins un interrupteur à deux bornes, reliées aux bornes de commutation du commutateur, la fermeture de cet interrupteur provoquant l'établissement de la liaison entre les deux ordinateurs.

Selon une autre caractéristique, les moyens pour établir les premier et second circuits virtuels, comprennent un premier commutateur à deux positions comportant une borne commune reliée à une cathode d'une diode dont l'anode est reliée à une sortie de la jonction d'entrée-sortie et deux bornes de commutation reliées respectivement à deux entrées prédéterminées de réception de données du concentrateur correspondant respectivement aux circuits virtuels à établir, un second commutateur à deux positions comportant une borne commune reliée à une entrée de la jonction d'entrée-sortie et deux bornes de commutation reliées respectivement à deux sorties du concentrateur correspondant aux circuits virtuels à établir, ce concentrateur présentant ainsi une entrée et une sortie pour chaque circuit virtuel à établir.

Selon une autre caractéristique, les moyens de liaison comprennent un premier interrupteur et une première diode reliés en série entre l'entrée du concentrateur correspondant au premier circuit virtuel et la sortie du concentrateur correspondant au second circuit virtuel et un second interrupteur et une seconde diode reliés en série entre l'entrée du concentrateur correspondant au second circuit virtuel et la sortie du concentrateur, correspondant au premier circuit virtuel, ces diodes étant passantes dans un sens qui va d'une sortie vers une entrée du concentrateur.

Les caractéristiques et avantages de l'invention ressortiront mieux de la description qui va suivre, donnée en référence aux dessins annexés dans lesquels:

– la fig. 1 représente très schématiquement, un dispositif conforme à l'invention, pour commander des transferts de fichiers entre des ordinateurs reliés à un réseau de communication accessible par un terminal;
– la fig. 2 representé schématiquement sur des diagrammes a, b, c, d et e, les différentes étapes de mise en œuvre du dispositifs de l'invention;
– la fig. 3 représente de manière plus détaillée, le dispositifs de l'invention.

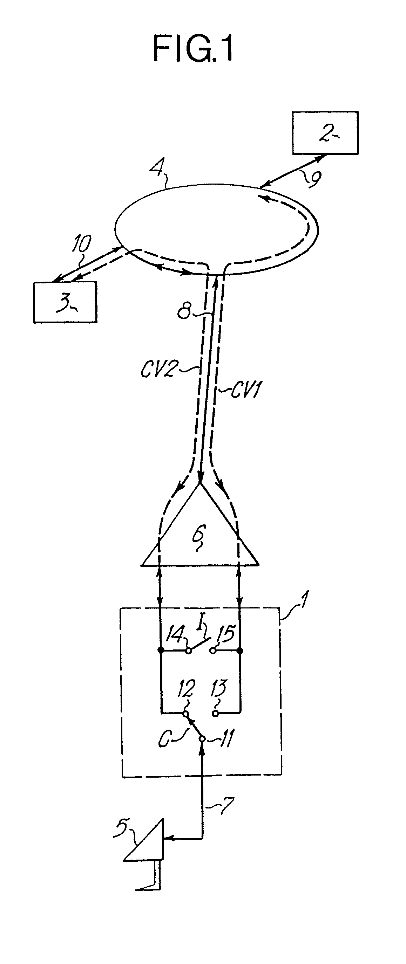

La figure 1 représente schématiquement un dispositif 1 conforme à l'invention, qui permet de commander des transferts de fichiers entre des ordinateurs 2, 3 reliés à un réseau 4 de communications, ce réseau est accessible à au moins un terminal 5, par l'intermédiaire d'un concentrateur 6 de terminaux asynchrones connecté entre le réseau 4 et une jonction 7 d'entrée-sortie du terminal 5. Un concentrateur est un moyen bien connu dans l'état de la technique: c'est une unité fonctionnelle qui permet à des sources de données, d'utiliser des moyens communs de transmission; le nombre de sources de données est supérieur au nombre de voies couramment disponibles de ces moyens de transmission. Ce concentrateur peut être, par exemple, d'un type respectant les avis X3 et X28 du CCITT (Comité Consultatif International Télégraphique et Téléphonique). La jonction 7, qui permet de relier le terminal 5 avec les entrées-sorties du concentrateur 6, peut être par exemple une jonction d'un type respectant l'avis V24 du CCITT. Le réseau 4, ainsi que les liaisons 8, 9, 10, respectives, entre ce réseau, le concentrateur 6 et les ordinateurs 2, 3, sont des liaisons d'un type respectant l'avis X25 du CCITT.

Le dispositif 1 comprend des moyens C qui sont connectés entre la jonction 7 d'entrée-sortie du terminal 5 et le concentrateur 6; ces moyens permettent d'établir de manière asynchrone, par l'intermédiaire du concentrateur 6, un premier circuit virtuel CV1 par exemple, entre le terminal 5 et un premier ordinateur 2 du réseau; ils permettent aussi d'établir, par exemple, un second circuit virtuel CV2 entre le terminal 5 et un second ordinateur 3 relié au réseau. Le dispositif comprend aussi des moyens de liaison I qui permettent de relier ensuite les circuits virtuels CV1 et CV2 ainsi établis, de manière à assurer alors des transferts de fichiers entre l'ordinateur 2 et l'ordinateur 3. Il est bien évident que sur la figure, le nombre des ordinateurs reliés au réseau, a été limité à deux, mais ce nombre pourrait être supérieur.

La notion de circuit virtuel est bien connue dans l'état de la technique: c'est un service qui est offert pour un réseau exploité généralement en transmission par paquets; il correspond à une procédure d'établissement et de libération de la communication dans laquelle est fixée une période prédéterminée entre deux équipements terminaux de traitement de données, pendant laquelle les données des usagers sont transmises dans le réseau en mode paquets. Toutes les données de l'usager sont émises par le réseau dans l'ordre dans lequel elles ont été reçues par ce réseau.

Les moyens C qui permettent d'établir les premier et second circuits virtuels CV1, CV2, comprennent au moins un commutateur à deux positions comportant une borne commune 11 reliée à la jonction 7 d'entrée-sortie du terminal, et deux bornes de commutation 12, 13, reliées au concentrateur 6; ces bornes correspondent aux deux positions du commutateur C et permettent d'établir les premier et second circuits virtuels CV1, CV2.

Les moyens de liaison I sont constitués par au moins un interrupteur à deux bornes 14, 15, reliées aux bornes 12, 13 du commutateur C; la fermeture de cet interrupteur permet d'établir la liaison entre les deux ordinateurs 2, 3, après l'établissement des circuits virtuels CV1, CV2.

Le dispositifs qui vient d'être décrit fonctionne de la manière suivante: au moyen du terminal asynchrone 5, on établit grâce au commutateur C, et à travers le concentrateur 6, un circuit virtuel avec chacun des ordinateurs 2, 3. Une connexion en temps partagé est ensuite initialisée sur chacun des ordinateurs. Ensuite, le dispositif 1, grâce à l'interrupteur I, met en relation les deux circuits virtuels, permettant ainsi aux ordinateurs 2, 3, de communiquer.

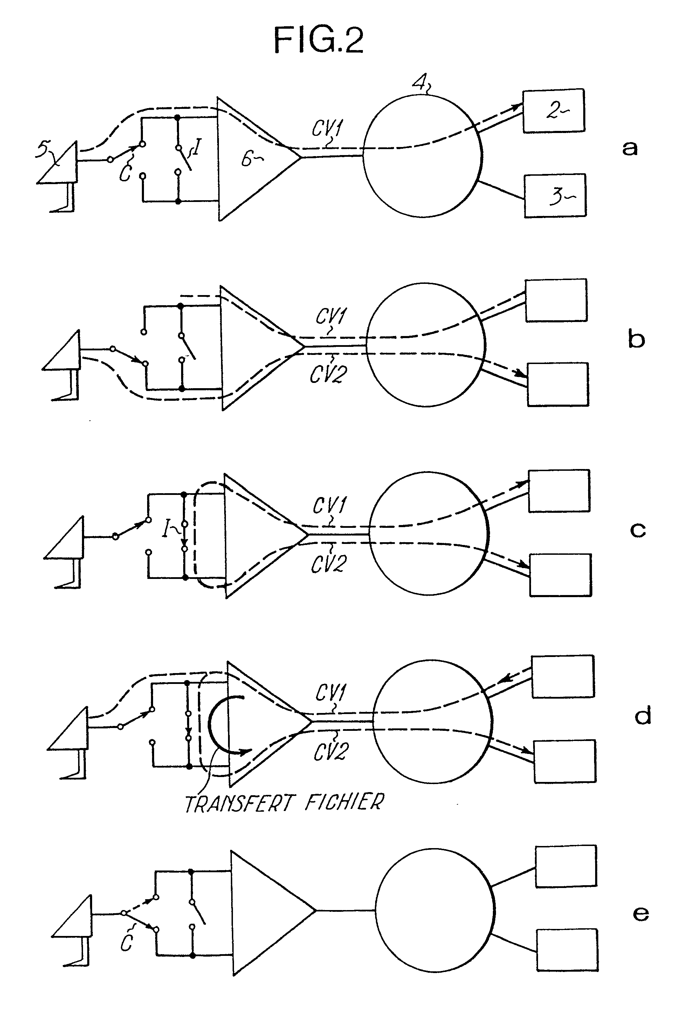

La figure 2 représente des diagrammes qui permettent de mieux comprendre les différentes étapes de mise en œuvre du dispositifs de l'invention. Sur ces diagrammes, comme sur la figure précédente, le terminal est représenté en 5, les moyens pour établir les circuits virtuels sont représentés en C, tandis que les moyens de liaison des circuits virtuels sont représentés en I. Le concentrateur est représenté schématiquement en 6 et le réseau en 4. Les ordinateurs reliés au réseau sont représentés en 2, 3. Dans l'exemple considéré, on suppose par exemple, que l'on désire transférer des fichiers entre l'ordinateur 2 fonctionnant avec un système d'exploitation de type GCOS et l'ordinateur 3 fonctionnant avec un systéme d'exploitation de type MULTICS, à travers le réseau 4 de type «à transmission par paquets», plus connu sous la dénomination TRANS-PAC.

– Sur le diagramme a, on suppose que la communication est établie entre le terminal 5 et l'ordinateur 2, grâce au circuit virtuel CV1. On suppose aussi que l'ordinateur 2 est émetteur et qu'il désire transférer un fichier vers l'ordinateur 3.

– Sur le diagramme b, la communication est établie entre l'ordinateur 3 et le terminal 5, grâce au circuit virtuel CV2, le circuit virtuel CV1 n'étant pas interrompu entre le concentrateur et l'ordinateur 2.

– Sur le diagramme c, la position du commutateur C est inversée, tandis que l'interrupteur I est fermé.

– Sur le diagramme d, le terminal envoie un ordre à l'ordinateur-émetteur 2 pour qu'il transfère les données d'un fichier contenu dans une mémoire non représentée, vers l'ordinateur-récepteur 3, à travers l'interrupteur I et le concentrateur 6. Ces données peuvent éventuellement défiler sur un écran du terminal 5, pour permettre à l'opérateur de contrôler le déroulement du transfert.

– Sur le diagramme e, on suppose que le transfert des données du fichier de l'ordinateur 2 vers l'ordinateur 3, est terminé. L'interrupteur I est ouvert puis chaque ordinateur est remis en communication avec le terminal 5 au moyen du commutateur C, pour achever les sessions de temps partagé établies entre les ordinateurs 2, 3.

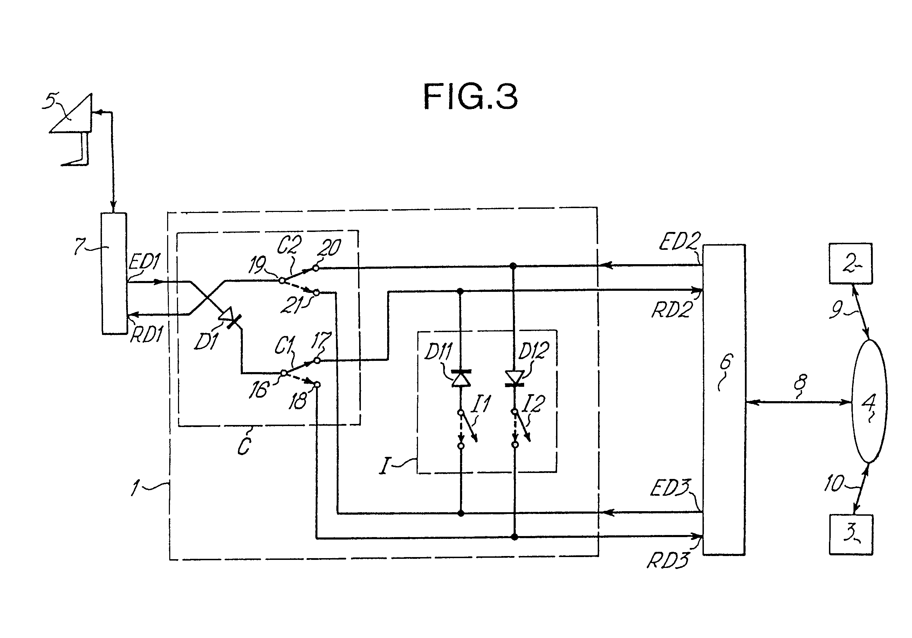

La figure 3 représente le dispositif de l'invention, de manière plus détaillée. Les moyens C qui permettent d'établir les premier et second circuits virtuels CV1, CV2 comprennent un premier commutateur C1 à deux positions qui présente une borne commune 16 reliée à une cathode d'une diode D1; l'anode de cette diode est reliée à une sortie ED1 de la jonction 7 d'entrée-sortie du terminal 5. Deux bornes de commutation 17, 18, du premier commutateur C1 sont respectivement reliées à deux entrées prédéterminées RD2, RD3, du concentrateur 6. Ces entrées correspondent respectivement aux circuits virtuels (CV1, CV2) à établir pour émettre des données respectivement vers les ordinateurs 2, 3, reliés au réseau 4. Ces données sont émises à travers les circuits virtuels CV1, CV2, qui ont été représentés sur la figure 1.

Les moyens C qui permettent d'établir les premier et second circuits virtuels comprennent aussi un second commutateur C2 à deux positions comportant une borne commune 19 reliée à une entrée RD1 de la jonction 7 d'entrée-sortie du terminal 5. Ce commutateur comprend aussi deux bornes de commutation 20, 21, reliées respectivement à deux sorties ED2, ED3, du concentrateur 6. Ces sorties correspondent, avec l'entrée RD1 de la jonction 7, aux circuits virtuels CV1, CV2 établis entre les ordinateurs 2, 3 reliés au réseau 4, pour émettre des données à travers ces circuits, vers le terminal 5. Le concentrateur présente ainsi une entrée et une sortie pour chaque circuit virtuel à établir.

Les moyens de liaison I comprennent un premier interrupteur I1 et une première D11, reliés en série entre l'entrée RD2 du concentrateur 6 correspondant au premier circuit virtuel et la sortie ED3 du concentrateur, correspondant au second circuit virtuel.

Les moyens de liaison I comprennent aussi un second interrupteur I2 et une seconde diode D12 reliés en série entre l'entrée RD3 du concentrateur correspondant au second circuit virtuel CV2 et la sortie ED2 du concentrateur correspondant au premier circuit virtuel CV1. Les diodes D11, D12, sont passantes dans un sens qui va d'une sortie ED2 ou ED3 du concentrateur vers une entrée RD2 ou RD3 de celui-ci.

Dans le dispositif qui vient d'être décrit, les circuits virtuels sont établis en émission de données vers chacun des ordinateurs 2, 3, grâce au commutateur C1. En réception de données, ces circuits virtuels sont établis grâce au commutateur C2. Lorsque ces opérations ont été effectuées, le transfert de données d'un fichier contenu dans la mémoire de l'ordinateur 2, est effectué vers l'ordinateur 3, grâce à la fermeture de l'interrupteur I2 qui était ouvert au moment de l'établissement des circuits virtuels. De la même manière, les transferts de données d'un fichier contenu dans une mémoire de l'ordinateur 3, sont effectués vers l'ordinateur 2, grâce à la fermeture de l'interrupteur I2 qui était ouvert au moment de l'établissement des circuits virtuels. La diode D1 qui est reliée à la sortie ED1 de la jonction 7 permet d'interdire toute réception de données sur la sortie ED1 de cette jonction.

Il est bien évident que dans le dispositif qui vient d'être décrit, les moyens utilisés auraient pu être remplacés par des moyens équivalents, sans sortir du cadre de l'invention.

**Revendications**

1. Dispositif (1) pour commander des transferts de fichiers entre des ordinateurs (2, 3), reliés à un réseau de communications (4), accessible à au moins un terminal (5) par l'intermédiaire d'un concentrateur (6) asynchrone, ce concentrateur étant connecté entre le réseau (4) et une jonction (7) d'entrée-sortie du terminal, comprenant des moyens (C) connectés entre la jonction (7) d'entrée-sortie du terminal (5) et le concentrateur (6), pour établir de manière asynchrone, par l'intermédiaire du concentrateur (6), un premier circuit virtuel (CV1) entre le terminal (5), et un premier ordinateur (2) du réseau, puis un second circuit virtuel (CV2) entre le terminal (5) et un second ordinateur du réseau (3), et des moyens de liaison (I) pour relier ensuite les circuits virtuels (CV1, CV2) ainsi établis, les transferts de fichiers entre le premier (2) et le second (3) ordinateurs étant alors effectués à travers ces moyens de liaison (I), caractérisé en ce que les moyens (C) pour établir les premier et second circuits virtuels (CV1, CV2) comprennent au moins un commutateur à deux positions comportant une borne commune (11) reliée à la jonction (7), d'entrée-sortie du terminal (5) et deux bornes de commutation (12, 13) reliées au concentrateur (6), et correspondant aux deux positions du commutateur, ce commutateur permettant d'établir les premier et second circuits virtuels (CV1, CV2).

2. Dispositif selon la revendication 1, caractérisé en ce que les moyens de liason (I) comprennent au moins un interrupteur à deux bornes (14, 15) reliées aux bornes de commutation (12, 13) du commutateur (C), la fermeture de cet interrupteur provoquant l'établissement de la liaison entre les deux ordinateurs.

3. Dispositif selon la revendication 1, caractérisé en ce que les moyens (C) pour établir les premier et second circuits virtuels (CV1, CV2) comprennent un premier commutateur (C1) à deux positions comportant une borne commune (16) reliée à une cathode d'une diode (D1) dont l'anode est reliée à une sortie (ED1) de la jonction (7) d'entrée-sortie et deux bornes de commutation (17, 18) reliées respectivement à deux entrées prédéterminées (RD2, RD3) de réception de données du concentrateur (6) correspondant respectivement aux circuits virtuels (CV1, CV2) à établir, un second commutateur (C2) à deux positions comportant une borne commune (19) reliée à une entrée (RD1) de la jonction (7) d'entrée-sortie et deux bornes de commutation (20, 21), reliées respectivement à deux sorties (ED2, ED3) du concentrateur (6) correspondant aux circuits virtuels (CV1, CV2) à établir, ce concentrateur (6) présentant ainsi une entrée et une sortie pour chaque circuit virtuel à établir.

4. Dispositif selon la revendication 3, caractérisé en ce que les moyens de liaison (I) comprennent un premier interrupteur (I1) et une première diode (D11) reliés en série entre l'entré (RD2) du concentrateur (6) correspondant au premier circuit virtuel (CV1) et la sortie (ED3) du concentrateur correspondant au second circuit virtuel (CV2) et un second interrupteur (I2) et une seconde diode (D12) reliées en série entre l'entrée (RD3) du concentrateur (6) correspondant au second circuit virtuel (CV2), et la sortie (ED2) du concentrateur, correspondant au premier circuit virtuel, ces diodes étant passantes dans un sens qui va d'une sortie vers une entrée du concentrateur.

**Patentansprüche**

1. Vorrichtung (1) für die Steuerung von Dateienübertragungen zwischen Rechnern (2, 3), die mit einem Nachrichtenverbindungsnetz (4) verbunden sind, das für wenigstens ein Terminal (5) mittels eines asynchronen Konzentrators (6) zugänglich ist, wobei dieser Konzentrator zwischen das Netz (4) und eine Eingangs-/Ausgangsschnittstelle (7) des Terminals geschaltet ist, enthaltend Einrichtungen (C), die zwischen die Eingangs-/Ausgangsschnittstelle (7) des Terminals (5) und den Konzentrator (6) geschaltet sind, um mittels des Konzentrators (6) auf asynchrone Art einen ersten virtuellen Schaltkreis (CV1) zwischen dem Terminal (5) und einem ersten Rechner (2) des Netzes einzurichten und dann einen zweiten virtuellen Schaltkreis (CV2) zwischen dem Terminal (5) und einem zweiten Rechner des Netzes (3) einzurichten, und Verbindungseinrichtungen (I), um dann die so eingerichteten virtuellen Schaltkreise (CV1, CV2) miteinander zu verbinden, wobei die Dateienübertragungen zwischen dem ersten (2) und dem zweiten (3) Rechner auf diese Weise über diese Verbindungseinrichtungen (I) ausgeführt werden, dadurch gekennzeichnet, dass die Einrichtungen (C) zum Einrichten der ersten und zweiten virtuellen Schaltkreise (CV1, CV2) wenigstens einen Umschalter mit zwei Stellungen enthalten, der einen gemeinsamen Anschluß (11), der mit der Eintritts-/Austrittsschnittstelle (7) des Terminal (5) verbunden ist, und zwei Umschaltanschlüsse (12, 13) hat, die mit dem Konzentrator (6) verbunden sind und den zwei Stellungen des Umschalters entsprechen, wobei dieser Umschalter es erlaubt, die ersten und zweiten virtuellen Schaltkreise (CV1, CV2) einzurichten.

2. Vorrichtung nach Anspruch 1, dadurch gekennzeichnet, daß die Verbindungseinrichtungen (I) wenigstens einen Unterbrecher mit zwei Anschlüssen (14, 15) aufweisen, der mit den Umschaltanschlüssen (12, 13) des Umschalters (C) verbunden sind, wobei das Schließen dieses Unterbrechers die Einrichtung der Verbindung zwischen den zwei Rechnern hervorruft.

3. Vorrichtung nach Anspruch 1, dadurch gekennzeichnet, daß die Einrichtungen (C) zum Einrichten der ersten und zweiten virtuellen Schaltkreise (CV1, CV2) enthalten: einen ersten Umschalter (C1) mit zwei Stellungen, der einen gemeinsamen Anschluss (16), der mit einer Kathode einer Diode (D1) verbunden ist, deren Anode mit einem Ausgang (ED1) der Eingangs-/Ausgangsschnittstelle (7) verbunden ist, und zwei Umschaltanschlüsse (17, 18) hat, die jeweils mit zwei vorbestimmten Eingängen (RD2, RD3) zur Aufnahme der Ausgänge des Konzentrators (6) entsprechend jeweils den einzurichtenden virtuellen Schaltkreisen (CV1, CV2) verbunden sind, einen zweiten Umschalter (C2) mit zwei Stellungen, der einen gemeinsamen Anschluß (19), der mit einem Eingang (RD1) der Eingangs-/Ausgangsschnittstelle (7) verbunden ist, und zwei Umschaltanschlüsse (20, 21) aufweist, die jeweils mit zwei Ausgängen (ED2, ED3) des Konzentrators (6) entsprechend den einzurichtenden virtuellen Schaltkreisen (CV1, CV2) verbunden sind, wobei der Konzentrator (6) auf diese Weise einen Eingang und einen Ausgang für den einzurichtenden virtuellen Schaltkreis anbietet.

4. Vorrichtung nach Anspruch 3, dadurch gekennzeichnet, daß die Verbindungseinrichtungen (I) enthalten: einen ersten Unterbrecher (I1) und eine erste Diode (D11), die zwischen den Eingang (RD2) des Konzentrators (6), der dem ersten virtuellen Schaltkreis (CV1) entspricht, und den Ausgang (ED3) des Konzentrators, der dem zweiten virtuellen Schaltkreis (CV2) entspricht, in Serie geschaltet sind, und einen zweiten Unterbrecher (12) und eine zweite Diode (D12), die zwischen den Eingang (RD3) des Konzentrators (6), der dem zweiten virtuellen Schaltkreis (CV2) entspricht, und dem Ausgang (ED2) des Konzentrators, der dem ersten virtuellen Schaltkreis entspricht, in Serie geschaltet sind, wobei die Dioden in einem solchen Sinne durchlässig sind, dass ein Ausgang einem Eingang des Konzentrators zugeführt wird.

**Claims**

1. Device (1) for controlling file transfers between computers (2, 3), connected to a communications network (4) accessible to at least one terminal (5) via an asynchronous concentrator (6), this concentrator being connected between the network (4) and an input/output interface (7) of the terminal, comprising means (C) connected between the input/output interface (7) of the terminal (5) and the concentrator (6) for establishing, in asynchronous manner via the concentrator (6), a first virtual circuit (CV1) between the terminal (5) and a first computer (2) of the network, then a second virtual circuit (CV2) between the terminal (5) and the second network computer (3), and connecting means (I) for then connecting the virtual circuits (CV1, CV2) thus established, the file transfers between the first (2) and the second (3) computers then being effected across these connecting means (I), characterized in that the means (C) for establishing the first and second virtual circuits (CV1, CV2) comprise at least one two-position switch having a common terminal (11) connected to the input/output interface (7) of the terminal (5) and two switching terminals (12, 13) connected to the concentrator (6) and corresponding to two switch positions, this switch allowing the first and second virtual circuits (CV1, CV2) to be established.

2. Device according to Claim 1, characterized in that the connecting means (I) comprise at least one circuit breaker with two terminals (14, 15) connected to the switching terminals (12, 13) of the switch (C), closure of this circuit breaker bringing about the establishment of the connection between the two computers.

3. Device according to Claim 1, characterized in that the means (C) for establishing the first and second virtual circuits (CV1, CV2) comprise a first two-position switch (C1) having one common terminal (16) connected to a cathode of a diode (D1) tha anode of which is connected to an output (ED1) of the input output interface (7), and two switching terminals (17, 18) respectively connected to two predetermined data reception inputs (RD2, RD3) of the concentrators (6) respectively corresponding to the virtual circuits (CV1, CV2) to be established, a second two-position switch (C2) having a common terminal (19) connected to one input (RD1) of the input/output interface (7) and two switching terminals (20, 21) respectively connected to two outputs (ED2, ED3) of the concentrator (6) corresponding to the virtual circuits (CV1, CV2) to be established, this concentrator (6) thus presenting one input and one output for each virtual circuit to be established.

4. Device according to Claim 3, characterized in that the connecting means (I) comprise a first circuit breaker (I1) and a first diode (D11) connected in series between the input (RD2) of the concentrator (6) corresponding to the first virtual circuit (CV1) and the output (ED3) of the concentrator corresponding to the second virtual circuit (CV2), and a second circuit breaker (I2) and a second diode (D12) connected in series between the input (RD3) of the concentrator (6) corresponding to the second virtual circuit (CV2) and the output (ED2) of the concentrator, corresponding to the first virtual circuit, these diodes conducting in a direction going from one output to one input of the concentrator.

# FIG.1

# FIG.2

# FIG.3